# EUROPÄISCHE PATENTANMELDUNG

(11) **EP 3 001 020 A1**
(43) Veröffentlichungstag der Anmeldung: **30.03.2016**
(21) Anmeldenummer: 15186113.5
(22) Anmeldetag: 21.09.2015
(51) Int. Cl.: F02K 3/06, F02C 7/36

(54) **FLUGTRIEBWERK MIT EINER KOMPRESSOREINRICHTUNG**

(30) Priorität: 26.09.2014 DE 102014114043
(71) Anmelder: Rolls-Royce Deutschland Ltd & Co KG, 15827 Blankenfelde-Mahlow (DE)
(72) Erfinder: Venter, Gideon, 14165 Berlin (DE)
(74) Vertreter: Schmidt, Martin Michael

(57) **Zusammenfassung**

Es wird ein Flugtriebwerk (1) mit einer Kompressoreinrichtung und mit einer Bläsereinrichtung (2) beschrieben. Die Kompressoreinrichtung ist im Bereich einer Kompressorwelle (3) über ein Umlaufgetriebe (4) mit einer Bläserwelle (5) verbunden. Ein Planetensteg (6) ist mit Planetenrädern (7) über Lagereinrichtungen (8) wirkverbunden. Ein Hohlrad (11) ist mit der Bläserwelle (5) und ein Sonnenrad (12) des Umlaufgetriebes (4) ist mit der Kompressorwelle (3) gekoppelt, während der Planetenträger (6) gehäuseseitig drehfest gehalten ist. Das Hohlrad ist über eine flexible Verbindungseinrichtung mit der Bläserwelle und/oder der Planetenträger (6) ist über eine flexible Verbindungseinrichtung (13) mit dem Gehäuse (14) verbunden. Im Bereich der Verbindungseinrichtung (13) sind Bewegungen zwischen dem Hohlrad und den Planetenrädern und/oder zwischen dem Planetenträger (6) und dem Gehäuse (14) in radialer und axialer Richtung wenigstens annähernd kompensierbar.

## Beschreibung

Die Erfindung betrifft ein Flugtriebwerk mit einer Kompressoreinrichtung gemäß der im Oberbegriff des Patentanspruches 1 näher definierten Art.

Aus der Praxis bekannte Turbomaschinen weisen üblicherweise zwei oder drei Rotoren auf, die mit unterschiedlichen Drehzahlen mit der gleichen oder mit unterschiedlichen Drehrichtungen umlaufen.

Bei direkt angetriebenen Maschinen ist eine Niederdruckturbine bzw. eine Kompressoreinrichtung einer solchen Turbomaschine direkt mit einem Bläser verbunden, womit die Niederdruckturbine und der Bläser mit der gleichen Drehzahl rotieren. Bei der nächsten Generation von Turbofans mit hohem Nebenstromverhältnis wird die direkte Abhängigkeit zwischen der Bläsergeschwindigkeit und der Geschwindigkeit der Niederdruckturbine aufgelöst, um sowohl den Bläser als auch die Niederdruckturbine in optimalen Betriebsbereichen betreiben zu können. Ein Anstieg des Bläserdurchmessers erfordert in diesem Zusammenhang eine Reduktion der Bläserdrehzahl, während der Betriebswirkungsgrad der Niederdruckturbine durch Anheben der Drehzahl bei gleichzeitiger Reduktion des Schaufelradius verbesserbar ist. Der verbesserte Betriebswirkungsgrad bietet wiederum die Möglichkeit, die Niederdruckturbine mit einer geringeren Anzahl an Turbinenstufen auszuführen, womit die Niederdruckturbine durch ein geringeres Eigengewicht gekennzeichnet und kostengünstiger herstellbar ist.

Die derzeit effizienteste Methode zur Übertragung der Antriebsleistung der Niederdruckturbine und zum Absenken der Turbinendrehzahl in Bezug auf die für den Betrieb des Bläsers erforderliche Drehzahl stellt die Kopplung zwischen der Niederdruckturbine und dem Bläser über ein Untersetzungsgetriebe dar.

Dabei bieten Umlaufuntersetzungsgetriebe mit gehäusefestem Planetenträger oder mit drehbar ausgeführtem Planetenträger das gewünschte Untersetzungsverhältnis bei gleichzeitig hoher Leistungsdichte.

Um bei gehäusefest ausgeführtem Planetenträger das erforderliche Untersetzungsverhältnis im Bereich eines Umlaufgetriebes bzw. eines Planetenradsatzes zu erreichen, ist eine Kompressorwelle der Niederdruckturbine mit einem Sonnenrad eines Umlaufgetriebes verbunden. Das Hohlrad ist wiederum mit einer den Bläser antreibenden Bläserwelle gekoppelt. Die Reaktionsmomente im Bereich des statischen Planetenträgers werden in das Gehäuse eingeleitet.

Das im Bereich der Niederdruckturbine wirkende Drehmoment wird über ein Keilwellenprofil mittig auf das Sonnenrad übertragen. Von dort wird das Drehmoment auf die Planetenradeingriffe aufgeteilt. Im Bereich jedes Zahneingriffes zwischen dem Sonnenrad und einem Planetenrad wird das Drehmoment zusätzlich zwischen den beiden mit gegengleichen Schrägungswinkeln ausgeführten Zahnbereichen der Planetenräder und des Sonnenrades aufgeteilt.

Im Bereich der Zahneingriffe zwischen den Planetenrädern und dem Hohlrad wird das zuvor aufgeteilte Drehmoment wieder aufsummiert und treibt das Hohlrad und den damit wirkverbunden Bläser an. Die im Bereich der Verzahnungen zwischen den Planetenrädern und dem Sonnenrad sowie zwischen den Planetenrädern und dem Hohlrad auftretenden Reaktionsmomente werden über Lagerungen der Planetenräder in den gehäusefesten Planetenträger und von dort in das Gehäuse der Turbomaschine eingeleitet. Um Verdrillungen des Planetenträgers zu vermeiden, erfolgt die Kraftanleitung möglichst im Zentrum des Umlaufgetriebes, wobei zusätzlich sphärische Lagereinheiten vorgesehen werden, um eine Verdrillung des Planetenträgers vermeidende Ausgleichsbewegungen bzw. eine Verdrillung des Planetenträgers herabsetzende Ausgleichsbewegungen zwischen den Planetenrädern und dem Planetenträger zu ermöglichen.

Eine solche Ausführung eines Umlaufgetriebes ist beispielsweise aus der US 2005/0026745 A1 bekannt, bei der im Bereich zwischen einem drehbar ausgeführten Planetenträger innerhalb von Planetenrädern im Bereich der Wirkverbindungen zwischen dem Planetenträger und den Planetenrädern sphärische Lager vorgesehen sind.

Nachteilhafterweise sind bei dieser Ausführung eines Umlaufgetriebes eine Verdrillung des Planetenträgers minimierende Ausgleichsbewegungen über die sphärischen Lagereinheiten nur über eine entsprechend große Auslegung der sphärischen Lagereinheiten erreichbar, was jedoch einen unerwünschten Anstieg des Bauraumbedarfes, des Bauteilgewichtes und der Herstellkosten des Umlaufgetriebes verursacht.

Der vorliegenden Erfindung liegt daher die Aufgabe zugrunde, ein durch einen geringen Bauraumbedarf und ein niedriges Bauteilgewicht gekennzeichnetes, kostengünstig herstellbares Flugtriebwerk zur Verfügung zu stellen, bei welchem eine Verdrillung eines Planetenträgers eines Umlaufgetriebes gering ist.

Erfindungsgemäß wird diese Aufgabe mit einem Flugtriebwerk mit den Merkmalen des Patentanspruches 1 gelöst.

Das erfindungsgemäße Flugtriebwerk ist mit einer Kompressoreinrichtung bzw. einer Niederdruckturbine und mit einer von der Kompressoreinrichtung über eine Bläserwelle antreibbaren Bläsereinrichtung ausgeführt. Die Kompressoreinrichtung steht hierfür im Bereich einer Kompressorwelle über ein Umlaufgetriebe mit einer Bläserwelle in Wirkverbindung. Ein Planetensteg des Umlaufgetriebes ist wiederum mit darauf drehbar gelagerten Planetenrädern jeweils über in den Planetenrädern angeordneten Lagereinrichtungen verbunden. Die Lagereinrichtungen umfassen jeweils eine sphärische Lagereinheit zum Ausgleich von Kippbewegungen zwischen dem Planetenträger und den Planetenrädern und eine weitere Lagereinheit zur Drehentkopplung zwischen dem Planetenträger und den Planetenrädern.

Erfindungsgemäß ist ein Hohlrad mit der Bläserwelle sowie ein Sonnenrad des Umlaufgetriebes mit der Kompressorwelle gekoppelt, während der Planetenträger gehäuseseitig drehfest gehalten ist, wobei das Hohlrad über eine flexible Verbindungseinrichtung mit der Bläserwelle und/oder der Planetenträger über eine flexible Verbindungseinrichtung mit dem Gehäuse verbunden ist und im Bereich der Verbindungseinrichtung Bewegungen zwischen dem Hohlrad und den Planetenrädern und/oder zwischen dem Planetenträger und dem Gehäuse in radialer und axialer Richtung wenigstens annähernd kompensierbar sind.

Über die Verbindungseinrichtung zwischen dem Planetenträger und dem Gehäuse, die als flexible Membran ausführbar ist, sind auf einfache Art und Weise gehäuseseitige Bewegungen und Auslenkungen vom gehäuseseitig drehfest angebundenen Planetenträger entkoppelbar, womit Fehlstellungen im Bereich der Zahneingriffe zwischen den Planetenrädern und dem Sonnenrad sowie zwischen den Planetenrädern und dem Hohlrad mit geringem Aufwand vermeidbar bzw. reduzierbar sind und fertigungsbedingte Fehlstellungen in diesen Zahnbereichen mit bauraumgünstigen und durch ein geringes Gewicht gekennzeichnete sphärische Lagereinheiten ausgeglichen werden können.

Zusätzlich oder alternativ dazu sind über die Verbindungseinrichtung zwischen dem Hohlrad und der Bläserwelle, die als flexible Membran ausführbar ist, auf einfache Art und Weise Bewegungen und Auslenkungen im Bereich der Bläserwelle und Bewegungen und Auslenkungen im Bereich des Hohlrades voneinander entkoppelbar, womit Fehlstellungen im Bereich der Zahneingriffe zwischen den Planetenrädern und dem Hohlrad mit geringem Aufwand vermeidbar bzw. reduzierbar sind und fertigungsbedingte Fehlstellungen in diesen Zahnbereichen mit bauraumgünstigen und durch ein geringes Gewicht gekennzeichnete sphärische Lagereinheiten ausgeglichen werden können.

Dabei besteht die Möglichkeit, die Verbindungseinrichtung im Bereich zwischen dem Planetenrad und dem Gehäuse bzw. im Bereich zwischen dem Hohlrad und der Bläserwelle mit einem Blechteil auszuführen, das mittels Tiefziehen herstellbar ist und das sowohl in radialer als auch in axialer Erstreckung des Umlaufgetriebes die für die Kompensation erforderliche Flexiblität aufweist.

Damit sind unter anderem Verdrillungen bzw. Verwindungen im Bereich des Planetenträgers bzw. des Planetensteges auf einfache Art und Weise vermieden. Ein Umlaufgetriebe ist dadurch insgesamt mit geringen Abmessungen bauraumgünstig und mit geringem Eigengewicht auf kostengünstige Art und Weise herstellbar und verwendbar.

Bei einer konstruktiv einfachen und Bewegungen zwischen den Planetenträgern und dem Gehäuse und/oder zwischen dem Hohlrad und der Bläserwelle in radialer und axialer Richtung im erforderlichen Umfang kompensierenden Ausführungsform des erfindungsgemäßen Flugtriebwerkes umfasst die flexible Verbindungseinrichtung oder umfassen die flexiblen Verbindungseinrichtungen jeweils einen Bereich, der im Querschnitt wenigstens annähernd u-förmig ausgeführt ist. Die jeweils als Kompensator wirkende Verbindungseinrichtung ist dann in radialer und in axialer Richtung mit der zur Kompensation der Bewegungen zwischen dem Planetenträger und dem Gehäuse und/oder zwischen der Bläserwelle und dem Hohlrad erforderlichen Flexibilität und in Umfangsrichtung mit einer gewünscht hohen Steifigkeit ausführbar, um im Betrieb im Bereich des Planetenträgers wirkende Reaktionsmomente in gewünschtem Umfang im Bereich des Gehäuses abstützen zu können und Drehmomente zwischen der Bläserwelle und dem Hohlrad übertragen zu können.

Eine ebenfalls konstruktiv einfache und Bewegungen zwischen der Bläserwelle und dem Hohlrad in radialer und axialer Richtung im erforderlichen Umfang kompensierende Ausführungsform des erfindungsgemäßen Flugtriebwerkes ist mit einer flexiblen Verbindungseinrichtung zwischen der Bläserwelle und dem Hohlrad ausgebildet, die einen Bereich umfasst, der im Querschnitt wenigstens annähernd L-förmig ausgeführt ist. Die als Kompensator wirkende Verbindungseinrichtung ist dann in radialer und in axialer Richtung mit der zur Kompensation der Bewegungen zwischen der Bläserwelle und dem Hohlrad erforderlichen Flexibilität ausgeführt und in Umfangsrichtung mit einer gewünscht hohen Steifigkeit ausführbar, um im Betrieb im Bereich des Hohlrades und der Bläserwelle wirkende Drehmomente in gewünschtem Umfang übertragen zu können.

Die Lagereinrichtungen umfassen bei einer Fertigungstoleranzen mit geringem Aufwand ausgleichenden Weiterbildung des erfindungsgemäßen Flugtriebwerkes jeweils eine sphärische Lagereinheit zum Ausgleich von Kippbewegungen zwischen dem Planetenträger und den Planetenrädern und eine weitere Lagereinheit zur Drehentkopplung zwischen dem Planetenträger und den Planetenrädern.

Der Planetenträger steht bei einer durch einen geringen Bauraumbedarf gekennzeichneten Ausführungsform des erfindungsgemäßen Flugtriebwerkes über die sphärischen Lagereinheiten jeweils mit einem radial innerhalb eines Planetenrades angeordneten Innenlagerelement in Wirkverbindung.

Die Innenlagerelemente sind bei einer bauraumgünstigen Weiterbildung des erfindungsgemäßen Flugtriebwerkes über die jeweils zwischen einem Planetenrad und einem Innenlagerelement angeordneten weiteren Lagereinheiten drehbar mit dem Planetenrad verbunden.

Greift der Planetenträger mit fingerartigen Bereichen, die mit den sphärischen Lagereinheiten zusammen wirken, in die Planetenräder ein, sind im Bereich der Zahneingriffe zwischen den Planetenrädern und dem Hohlrad sowie zwischen den Planetenrädern und dem Sonnenrad auftretende Reaktionsmomente auf konstruktiv einfache Art und Weise in der Mitte des Umlaufgetriebes in den Planetenträger einleitbar, womit eine Verdrehung bzw. Verdrillung des Planetenträgers in Umfangsrichtung weiter reduziert ist und die Zahneingriffe der Planetenräder mit dem Hohl- und dem Sonnenrad beeinträchtigende Auslenkungen mit geringem Aufwand herabgesetzt bzw. vermieden werden.

Der Planetenträger ist bei einer einfach montierbaren und konstruktiv einfach ausgeführten Weiterbildung des erfindungsgemäßen Flugtriebwerkes im Bereich der fingerartigen Bereiche über in radialer Richtung des Umlaufgetriebes verlaufend angeordnete Bolzenelemente mit den Innenlagerelementen verbunden.

Sind die Bolzenelemente in etwa mit der Mitte des Planetenrades fluchtend jeweils mit einem im Bereich der fingerartigen Bereiche des Planetenträgers angeordneten und zumindest bereichsweise sphärisch ausgeführten Koppelelement der sphärischen Lagereinheit und mit einem Innenlagerelement gekoppelt, wirken im Bereich des Umlaufgetriebes nur geringe, die Zahneingriffe zwischen den Planetenrädern und dem Hohl- und dem Sonnenrad beeinträchtigende Reaktionsmomente, da die Reaktionsmomente im Wesentlichen in der Mitte des Umlaufgetriebes in den Planetenträger eingeleitet werden.

Die Bolzenelemente sind bei einer konstruktiv einfachen und mit geringem Aufwand montierbaren Ausführungsform des erfindungsgemäßen Flugtriebwerkes im Bereich der Innenlagerelemente in radialer Richtung festgelegt.

Bei kostengünstigen weiteren Ausführungsformen des erfindungsgemäßen Flugtriebwerkes sind die weiteren Lagereinheiten als Wälz- und/oder Gleitlager ausgeführt.

Weisen die Planetenräder jeweils zwei voneinander getrennte und in axialer Richtung voneinander beabstandete schrägverzahnte Zahnbereiche auf, die jeweils mit damit korrespondierenden schrägverzahnten Zahnbereichen des Hohlrades und des Sonnenrades kämmen, und sind die Schrägungswinkel der Zahnbereiche der Planetenräder, des Hohlrads und des Sonnenrades zur Minimierung axialer Verzahnungskräfte gegengleich ausgeführt, sind die Bauteile des Umlaufgetriebes des erfindungsgemäßen Flugtriebwerkes aufgrund der vergleichsweise im Betrieb niedrigen Belastungen mit geringen Abmessungen auslegbar, womit ein Bauraumbedarf des Umlaufgetriebes niedrig ist und ein Gesamtgewicht des Flugtriebwerkes in erwünschtem Umfang reduzierbar ist.

Ist der Planetenträger radial innerhalb der fingerartigen Bereiche über die Verbindungseinrichtung mit dem Gehäuse verbunden, ist die Verbindungseinrichtung selbst bei begrenzt zur Verfügung stehendem Bauraum mit einer für eine gewünscht hohe Flexibilität günstigen Bauteillänge bzw. Verbindungslänge zwischen dem Planetenträger und dem Gehäuse ausführbar.

Bei einer hiervon abweichenden Ausführungsform des Flugtriebwerkes, die ohne die Verbindungseinrichtung im Bereich zwischen dem Planetenträger und dem Gehäuse ausgeführt ist, ist der Planetenträger bauraumgünstig radial außerhalb der fingerartigen Bereiche am Gehäuse angebunden.

Wird ein Planetenträger eines Umlaufgetriebes, insbesondere eines Umlaufgetriebes eines vorstehend näher beschriebenen Flugtriebwerkes, der vorzugsweise mit Leitungen zum Führen von Fluid ausgebildet ist, über ein 3D-Druckverfahren hergestellt, ist der Planetenträger auf einfache Art und Weise mit geringen Fertigungskosten produzierbar.

Sowohl die in den Patentansprüchen angegeben Merkmale als auch die im nachfolgenden Ausführungsbeispiel des erfindungsgemäßen Flugtriebwerkes angegeben Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Gegenstandes ergeben sich aus den Patentansprüchen und aus dem nachfolgend unter Bezugnahme auf die Zeichnung prinzipmäßig beschriebenen Ausführungsbeispiel.

Es zeigt:
- Fig. 1: eine stark schematisierte Teillängsschnittansicht eines ersten Ausführungsbeispiels des erfindungsgemäßen Flugtriebwerkes;
- Fig. 2: eine schematisierte dreidimensionale Einzelansicht eines Planetenträgers eines Umlaufgetriebes des Flugtriebwerkes gemäß Fig. 1;
- Fig. 3: eine stark schematisierte Teillängsschnittansicht eines zweiten Ausführungsbeispiels des erfindungsgemäßen Flugtriebwerkes;
- Fig. 4: eine schematisierte dreidimensionale Einzelansicht eines Planetenträgers eines Umlaufgetriebes des Flugtriebwerkes gemäß Fig. 3; und
- Fig. 5: eine stark schematisierte Teillängsschnittansicht eines dritten Ausführungsbeispiels des erfindungsgemäßen Flugtriebwerkes.

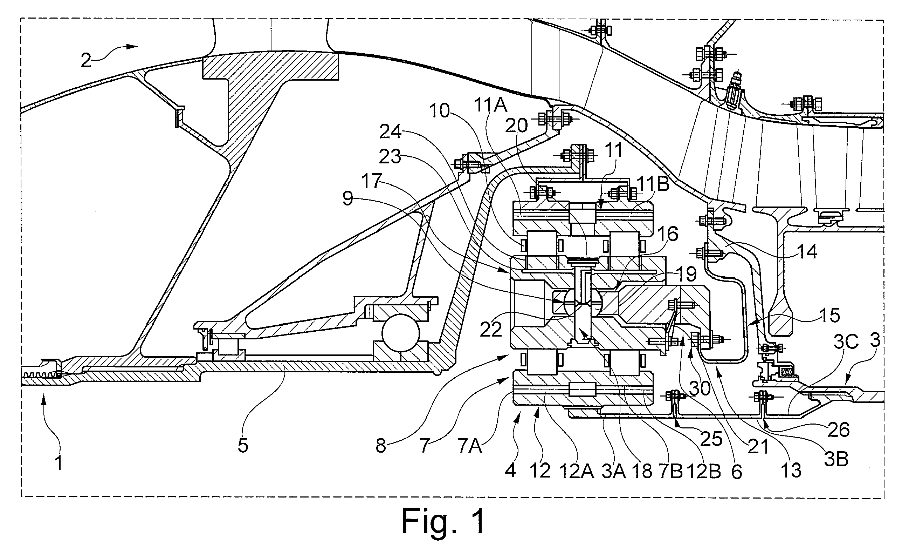

Fig. 1 zeigt eine Teillängsschnittansicht eines Flugtriebwerkes 1, die einen vorderen Bereich des vorliegend als Gasturbinenmaschine ausgeführten Flugtriebwerkes 1 darstellt. Das Flugtriebwerk 1 ist in einem hinteren Bereich mit einer nicht näher dargestellten Kompressoreinrichtung und in einem vorderen Bereich mit einer Bläsereinrichtung 2 ausgeführt. Die Bläsereinrichtung 2 ist von der Kompressoreinrichtung antreibbar, wobei die Kompressoreinrichtung hierfür im Bereich einer Kompressorwelle 3 über ein Umlaufgetriebe 4 mit einer Bläserwelle 5 in Verbindung steht. Ein Planetensteg 6 des Umlaufgetriebes 4 ist über in Planetenrädern 7 angeordnete Lagereinrichtungen 8 mit den Planetenrädern 7 verbunden, die in an sich bekannter Art und Weise drehbar auf dem Planetensteg 6 angeordnet sind.

Die Lagereinrichtungen 8 umfassen jeweils eine sphärische Lagereinheit 9 zum Ausgleich von Kippbewegungen zwischen dem Planetenträger bzw. dem Planetensteg 6 und den Planetenrädern 7 und eine weitere Lagereinheit 10 zur Drehentkopplung zwischen dem Planetenträger 6 und den Planetenrädern 7. Ein Hohlrad 11 ist mit der Bläserwelle 5 drehfest verbunden, während ein Sonnenrad 12 drehfest mit der Kompressorwelle 3 wirkverbunden ist.

Der Planetenträger 6 ist über eine flexible Verbindungseinrichtung 13 gehäuseseitig drehfest gehalten. Im Bereich der Verbindungseinrichtung 13 sind Bewegungen zwischen dem Planetenträger 6 und einem Gehäuse 14 in radialer und in axialer Richtung wenigstens annähernd kompensierbar bzw. ausgleichbar, womit Zahneingriffe im Bereich zwischen den Planetenrädern 7 und dem Hohlrad 11 sowie zwischen den Planetenrädern 7 und dem Sonnenrad 12 unabhängig von im Bereich des Gehäuses 14 durch angreifende Lasten verursachte Bewegungen des Gehäuses in gewünschtem Umfang störungsfrei vorliegen und die Planetenräder 7 sowohl mit dem Hohlrad 11 als auch mit dem Sonnenrad 12 möglichst verlustfrei und mit geringem Verschleiß kämmen.

Die flexible Verbindungseinrichtung 13 umfasst einen im Querschnitt wenigstens annähernd u-förmig ausgeführten Bereich 15, der sowohl in axialer Richtung als auch in radialer Richtung des Flugtriebwerkes 1 die gewünschte flexible Anbindung des Planetenträgers 6 am Gehäuse 14 ermöglicht und gleichzeitig in Umfangsrichtung entsprechend steif ausgeführt ist, um im Betrieb des Flugtriebwerkes 1 im Bereich des Umlaufgetriebes 4 auftretende Reaktionsmomente in gewünschtem Umfang über den Planetenträger 6 im Bereich des Gehäuses 14 abstützen zu können.

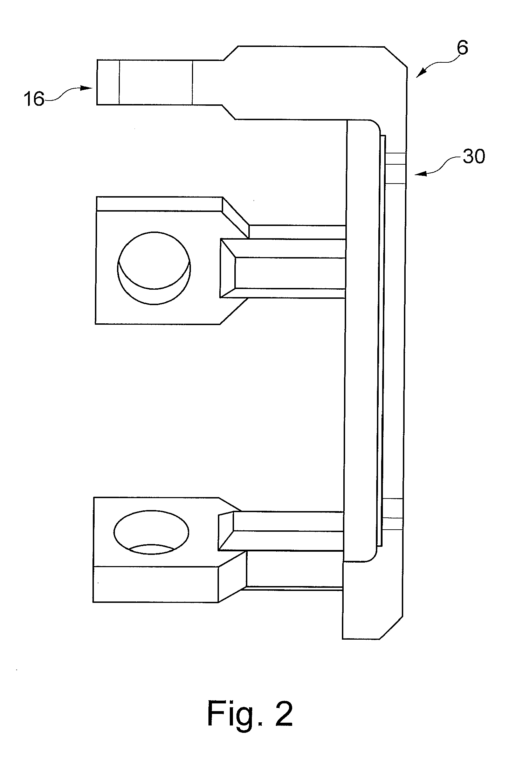

Der Planetenträger 6 greift mit in Fig. 2 näher dargestellten fingerartigen Bereichen 16 in die Planetenräder 7 ein, wobei der Planetenträger 6 vorliegend mit den fingerartigen Bereichen 16 mit den sphärischen Lagereinheiten 9 verbunden ist und über diese mit ebenfalls radial innerhalb der Planetenräder 7 angeordneten Innenlagerelementen 17 in Wirkverbindung steht. Die Innenlagerelemente 17 sind über die zwischen den Planetenrädern 7 und den Innenlagerelementen 17 angeordneten weiteren Lagereinheiten 10 drehbar mit den Planetenrädern 7 verbunden. Zusätzlich ist der Planetenträger 6 im Bereich der fingerartigen Bereiche 16 über in radialer Richtung des Umlaufgetriebes 4 verlaufend angeordnete Bolzenelemente 18 jeweils mit den Innenlagerelementen 17 gekoppelt. Dabei fluchten die Bolzenelemente 18 jeweils in etwa mit der Mitte der Planetenräder 7 und durchgreifen jeweils ein mit einem im Bereich der fingerartigen Bereiche 16 des Planetenträgers 6 angeordnetes und zumindest bereichsweise sphärisch ausgeführtes Koppelelement 19 der sphärischen Lagereinheiten 9, womit der Planetensteg 6 auch mit den Innenlagerelementen 17 verbunden ist. Zusätzlich sind die Bolzenelemente 18 im Bereich der Innenlagerelemente 17 vorliegend über Federringe 20 in radialer Richtung des Umlaufgetriebes 4 im Bereich der Innenlagerelemente 17 gesichert, um die Wirkverbindung zwischen dem Planetensteg 6 und den Innenlagerelementen 17 bei rotierenden Planetenrädern 7 über den gesamten Betriebsbereich des Flugtriebwerkes 1 gewährleisteten zu können.

Die weiteren Lagereinheiten 10 sind vorliegend als Zylinderrollenlager ausgeführt, in deren Bereichen Radialkräfte in gewünschtem Umfang zwischen den Planetenrädern 7 und dem Planetensteg 6 übertragbar sind.

Sowohl die Planetenräder 7, das Sonnenrad 12 als auch das Hohlrad 11 sind jeweils mit zwei voneinander getrennten und in axialer Richtung voneinander beabstandeten schrägverzahnten Zahnbereichen 7A und 7B, 11A und 11 B sowie 12A und 12B ausgeführt. Die Schrägungswinkel der Zahnbereiche 7A und 7B der Planetenräder 7, der Zahnbereiche 11A und 11 B des Hohlrades 11 und der Zahnbereiche 12A und 12B des Sonnenrades 12 sind zur Minimierung axialer Verzahnungskräfte gegengleich ausgeführt. Das bedeutet, dass Zähne der Zahnbereiche 7A und 7B sowie der Zahnbereiche 11 A und 11 B und auch der Zahnbereiche 12A und 12B jeweils schräg angeordnet sind, wobei der Schrägungswinkel jeweils den gleichen Wert aufweist, jedoch jeweils spiegelbildlich zum dem korrespondierenden Zahnbereich der Planetenräder 7, des Hohlrades 11 und des Sonnenrades 12 ausgeführt ist.

Der Planetensteg 6 ist im Bereich der fingerartigen Bereiche 16 jeweils über ein Strebenelement 21 drehfest mit den Innenlagerelementen 17 gekoppelt, um eine Drehbewegung der Innenlagerelemente 17 gegenüber dem Planetenträger 6 mit geringem Aufwand zu vermeiden.

Damit die Verzahnungen im Bereich des Umlaufgetriebes 4 in gewünschtem Umfang mit Schmier- und Kühlöl versorgbar sind, wird über den gehäusefest ausgeführten Planetensteg 6 Schmier- und Kühlöl in das Innere der Innenlagerelemente 17 eingeleitet und über in den Bolzenelementen 18 angeordnete Schmier- und Kühlölleitungen 22 in radialer Richtung des Umlaufgetriebes 4 von den sphärischen Lagereinheiten 9 in im Wesentlichen in axialer Richtung verlaufende weitere Leitungen 23 weitergeleitet. Von dort aus wird das Schmier- und Kühlöl wiederum in in radialer Richtung der Innenlagerelemente 17 verlaufenden zusätzlichen Leitungen 24 zu den weiteren Lagereinheiten 10 weitergeleitet. Dabei wird Schmier- und Kühlöl im Betrieb des Flugtriebwerkes 1 mithilfe der rotierenden Planetenräder 7 auch in Richtung der Zahneingriffe zwischen den Planetenrädern 7 und dem Hohlrad 11 sowie zwischen den Planetenrädern 7 und dem Sonnenrad 12 in gewünschtem Umfang weitergeleitet.

Um im Bereich des Sonnenrades 12 angreifende Biegemomente auf ein Minimum reduzieren zu können, ist die Kompressorwelle 3 vorliegend in einem definierten Umfang biegeweich ausgeführt, dass eventuell vorliegende Exzentrizitäten zwischen der Kompressorwelle 3 und dem Sonnenrad 12 ausgleichbar sind, ohne übermäßige Fluchtungsfehler im Bereich der Keilwellenverbindung zwischen der Kompressorwelle 3 und dem Sonnenrad 12 zu erzeugen. Damit ist gewährleistet, dass das Sonnenrad 12 im Betrieb seine gewünschte Position einnimmt. Die Kompressorwelle ist hierfür in mehrere über Flanschbereiche 25, 26 miteinander verbundene Bereiche 3A bis 3C aufgeteilt.

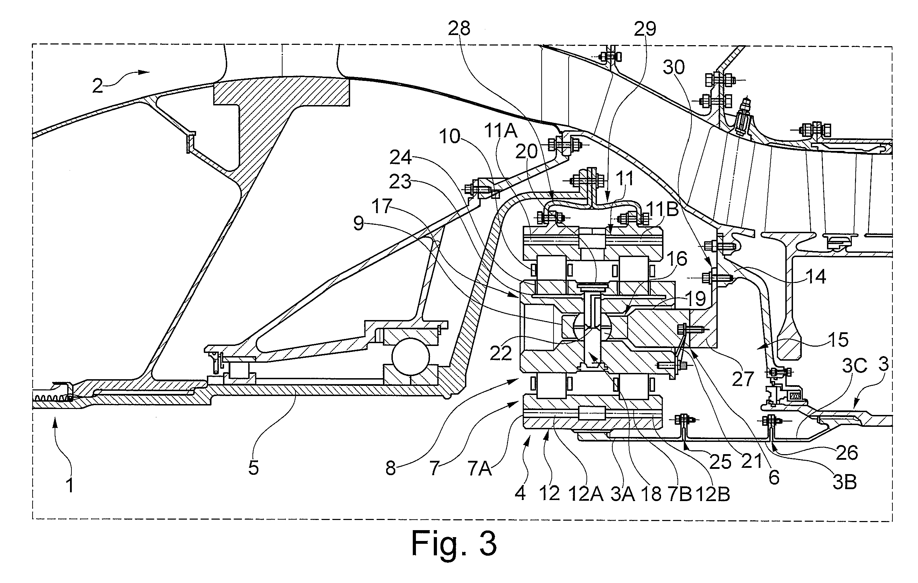

Fig. 3 zeigt eine Fig. 1 entsprechende Darstellung eines zweiten Ausführungsbeispiels des Flugtriebwerkes 1, das sich lediglich im Anbindungsbereich des Planetenträgers 6 am Gehäuse 14 und des Hohlrades 11 an der Bläserwelle 5 vom Flugtriebwerk gemäß Fig. 1 unterscheidet, weshalb in der nachfolgenden Beschreibung im Wesentlichen lediglich auf die Unterschiede zwischen den beiden Ausführungsbeispielen des Flugtriebwerkes 1 gemäß Fig. 1 und gemäß Fig. 3 näher eingegangen wird und bezüglich der weiteren Funktionsweise des Flugtriebwerkes 1 gemäß Fig. 3 auf die vorstehende Beschreibung zu Fig. 1 verwiesen wird.

Bei der Ausführung des Flugtriebwerkes 1 gemäß Fig. 3 ist der Planetenträger 6 über ein sowohl in Umfangsrichtung als auch in axialer Richtung sowie in radialer Richtung starres Verbindungselement 27 mit dem Gehäuse 14 verbunden, womit im Bereich zwischen dem Planetenträger 6 und dem Gehäuse 14 nicht in dem zu Fig. 1 beschriebenen Umfang Ausgleichsbewegungen möglich sind. Damit Zahneingriffe im Bereich des Umlaufgetriebes 4 dennoch in gewünschtem Umfang störungsfrei vorliegen und die Planetenräder 7 sowohl mit dem Hohlrad 11 als auch mit dem Sonnenrad 12 möglichst verlustfrei und mit geringem Verschleiß kämmen, ist zwischen der Bläserwelle 5 und dem Hohlrad 11 eine im Grunde die gleiche Wirkungsweise wie die Verbindungseinrichtung 13 des Flugtriebwerkes 1 gemäß Fig. 1 zur Verfügung stellende weitere Verbindungseinrichtung 28 vorgesehen. Die Verbindungseinrichtung 28 ist ebenfalls mit einem u-förmigen Bereich 29 ausgebildet, der sowohl in axialer Richtung als auch in radialer Richtung des Flugtriebwerkes 1 gemäß Fig. 3 die gewünschte flexible Anbindung des Hohlrades 11 an der Bläserwelle 5 ermöglicht und gleichzeitig in Umfangsrichtung entsprechend steif ausgeführt ist, um im Betrieb des Flugtriebwerkes 1 Drehmomente zwischen der Bläserwelle 5 und dem Hohlrad 11 übertragen zu können.

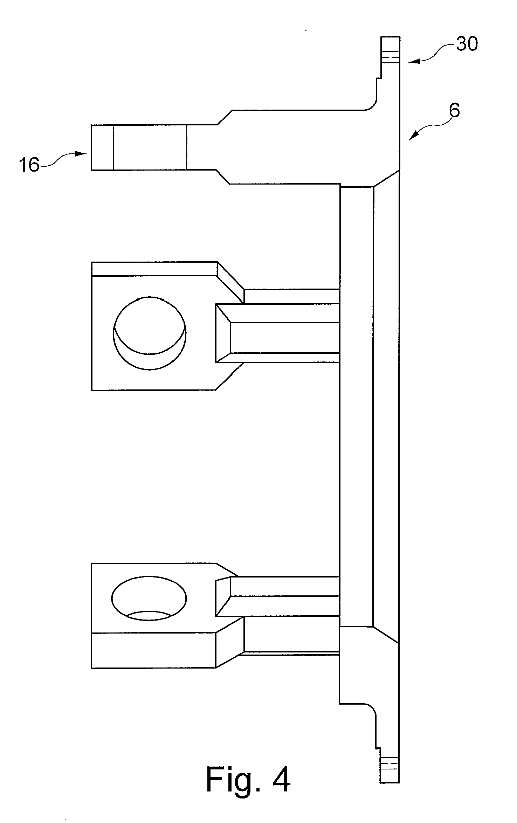

Der in Fig. 4 dargestellte Planetenträger 6 des Flugtriebwerkes 1 gemäß Fig. 3 greift ebenfalls in der zu Fig. 2 näher erläuterten Art und Weise mit fingerartigen Bereichen 16 in die Planetenräder 7 ein. Im Unterschied zu der Ausführung des Planetenträgers 6 gemäß Fig. 2 ist der Planetenträger 6 gemäß Fig. 4 radial außerhalb der fingerartigen Bereiche 16 in Verbindungsbereichen 30 am Gehäuse 14 anbindbar, die bei der Ausführungsform des Planetenträgers 6 gemäß Fig. 2 radial innerhalb der fingerartigen Bereiche 16 vorgesehen sind, um die Verbindungseinrichtung 13 gemäß Fig. 1 mit einer möglichst großen Verbindungslänge zwischen dem Planetenträger 6 und dem Gehäuse 14 bei gleichzeitig geringem Bauraumbedarf ausführen zu können. Bei der letztgenannten Ausführung des Planetenträgers 6 und der Verbindungseinrichtung 13 gemäß Fig. 1 bzw. gemäß Fig. 2 ist im Bereich der flexiblen Verbindungseinrichtung 13 auf bauraumgünstige Art und Weise eine in axialer und in radialer Richtung gewünschte Flexibilität der als Kompensator wirkenden flexiblen Verbindungseinrichtung 13 zur Verfügung stellbar.

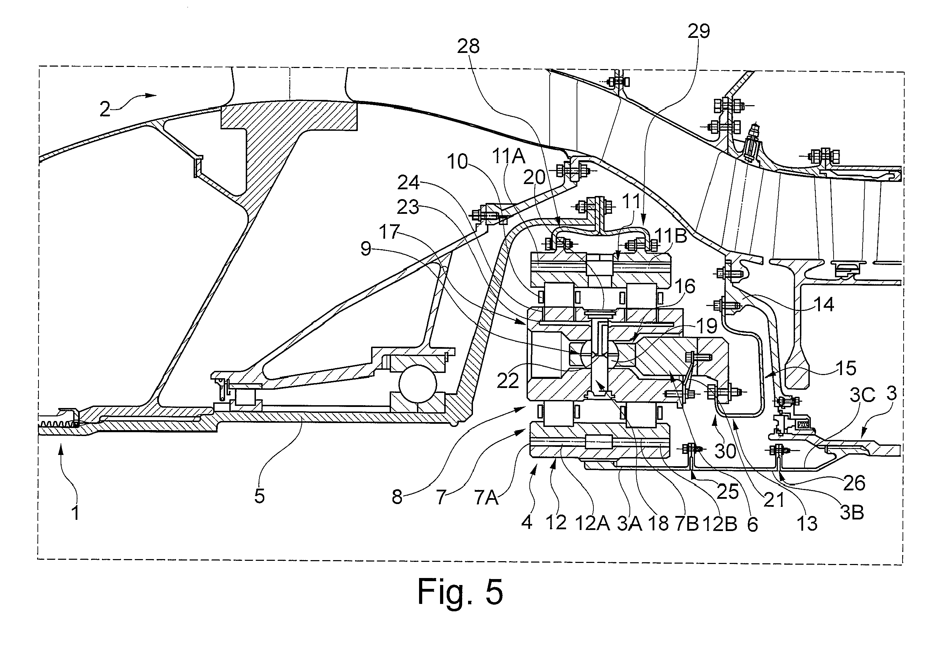

Eine dritte Ausführungsform des erfindungsgemäßen Flugtriebwerkes 1 ist in Fig. 5 dargestellt, bei der sowohl der Planetenträger 6 über die flexible Verbindungseinrichtung 13 gemäß Fig. 1 mit dem Gehäuse 14 und das Hohlrad 11 über die weitere Verbindungseinrichtung 28 gemäß Fig. 3 mit der Bläserwelle 5 gekoppelt ist. Die dritte Ausführungsform des Flugtriebwerkes 1 gemäß Fig. 5 stellt somit eine Kombination aus dem Flugtriebwerk 1 gemäß Fig. 1 und dem Flugtriebwerk 1 gemäß Fig. 3 dar, weshalb bezüglich der Funktionsweise des Flugtriebwerkes 1 gemäß Fig. 5 auf die vorstehende Beschreibung zu Fig. 1 bis Fig. 4 verwiesen wird.

### Bezugszeichenliste

- 1: Flugtriebwerk
- 2: Bläsereinrichtung
- 3: Kompressorwelle
- 3A bis 3C: Bereich der Kompressorwelle
- 4: Umlaufgetriebe
- 5: Bläserwelle
- 6: Planetensteg, Planetenträger
- 7: Planetenrad
- 7A, B: Zahnbereich des Planetenrades
- 8: Lagereinrichtung
- 9: sphärische Lagereinheit
- 10: weitere Lagereinheit
- 11: Hohlrad
- 11A, B: Zahnbereich des Hohlrades
- 12: Sonnenrad
- 12A, B: Zahnbereich des Sonnenrades
- 13: flexible Verbindungseinrichtung
- 14: Gehäuse
- 15: u-förmiger Bereich der flexiblen Verbindungseinrichtung
- 16: fingerartiger Bereich des Planetensteges
- 17: Innenlagerelement
- 18: Bolzenelement
- 19: sphärisches Koppelelement
- 20: Federring
- 21: Strebenelement
- 22: Schmier- und Kühlölleitung
- 23: weitere Leitung
- 24: zusätzliche Leitung
- 25, 26: Flanschbereich
- 27: Verbindungselement
- 28: weitere Verbindungseinrichtung
- 29: u-förmiger Bereich der weiteren Verbindungseinrichtung
- 30: Verbindungsbereich

## Patentansprüche

1. Flugtriebwerk (1) mit einer Kompressoreinrichtung und mit einer von der Kompressoreinrichtung über eine Bläserwelle (5) antreibbaren Bläsereinrichtung (2), wobei die Kompressoreinrichtung hierfür im Bereich einer Kompressorwelle (3) über ein Umlaufgetriebe (4) mit der Bläserwelle (5) und ein Planetenträger (6) des Umlaufgetriebes (4) mit darauf drehbar gelagerten Planetenrädern (7) jeweils über in den Planetenrädern (7) angeordnete Lagereinrichtungen (8) in Verbindung steht, **dadurch gekennzeichnet, dass** ein Hohlrad (11) mit der Bläserwelle (5) sowie ein Sonnenrad (12) des Umlaufgetriebes (4) mit der Kompressorwelle (3) gekoppelt ist, während der Planetenträger (6) gehäuseseitig drehfest gehalten ist, wobei das Hohlrad (11) über eine flexible Verbindungseinrichtung (28) mit der Bläserwelle (5) und/oder der Planetenträger (6) über eine flexible Verbindungseinrichtung (13) mit dem Gehäuse (14) verbunden ist und im Bereich der Verbindungseinrichtung (13; 28; 13, 28) Bewegungen zwischen dem Hohlrad (11) und den Planetenrädern (7) und/oder zwischen dem Planetenträger (6) und dem Gehäuse (14) in radialer und axialer Richtung wenigstens annähernd kompensierbar sind.

2. Flugtriebwerk nach Anspruch 1, **dadurch gekennzeichnet, dass** die flexible Verbindungseinrichtung (13; 28; 13, 28) einen Bereich (15) umfasst, der im Querschnitt wenigstens annähernd u-förmig ausgeführt ist.

3. Flugtriebwerk nach Anspruch 1, **dadurch gekennzeichnet, dass** die flexible Verbindungseinrichtung einen Bereich umfasst, der im Querschnitt wenigstens annähernd L-förmig ausgeführt ist.

4. Flugtriebwerk nach einem der Ansprüche 1 bis 3, **dadurch gekennzeichnet, dass** die Lagereinrichtungen (8) jeweils eine sphärische Lagereinheit (9) zum Ausgleich von Kippbewegungen zwischen dem Planetenträger (6) und den Planetenrädern (7) und eine weitere Lagereinheit (10) zur Drehentkopplung zwischen dem Planetenträger (6) und den Planetenrädern (7) umfasst.

5. Flugtriebwerk nach Anspruch 4, **dadurch gekennzeichnet, dass** der Planetenträger (6) über die sphärischen Lagereinheiten (9) jeweils mit einem radial innerhalb eines Planetenrades (7) angeordneten Innenlagerelement (17) in Wirkverbindung steht.

6. Flugtriebwerk nach Anspruch 5, **dadurch gekennzeichnet, dass** die Innenlagerelemente (17) über die jeweils zwischen einem Planetenrad (7) und einem Innenlagerelement (17) angeordneten weiteren Lagereinheiten (10) drehbar mit den Planetenrädern (7) verbunden sind.

7. Flugtriebwerk nach einem der Ansprüche 4 bis 6, **dadurch gekennzeichnet, dass** der Planetenträger (6) mit fingerartigen Bereichen (16), die mit den sphärischen Lagereinheiten (9) zusammenwirken, in die Planetenräder (6) eingreift.

8. Flugtriebwerk nach Anspruch 7, **dadurch gekennzeichnet, dass** der Planetenträger (6) im Bereich der fingerartigen Bereiche (16) über in radialer Richtung des Umlaufgetriebes (4) verlaufend angeordnete Bolzenelemente (18) mit den Innenlagerelementen (17) verbunden ist.

9. Flugtriebwerk nach Anspruch 8, **dadurch gekennzeichnet, dass** die Bolzenelemente (18) in etwa mit der Mitte des Planetenrades (7) fluchtend jeweils mit einem im Bereich der fingerartigen Bereiche (16) des Planetenträgers (6) angeordneten und zumindest bereichsweise sphärisch ausgeführten Koppelelement (19) der sphärischen Lagereinheit (9) und mit einem Innenlagerelement (17) gekoppelt sind.

10. Flugtriebwerk nach Anspruch 8 oder 9, **dadurch gekennzeichnet, dass** die Bolzenelemente (18) im Bereich der Innenlagerelemente (17) in radialer Richtung festgelegt sind.

11. Flugtriebwerk nach einem der Ansprüche 7 bis 10, **dadurch gekennzeichnet, dass** die fingerartigen Bereiche (16) jeweils drehfest mit den Innenlagerelementen (17) gekoppelt sind.

12. Flugtriebwerk nach einem der Ansprüche 4 bis 11, **dadurch gekennzeichnet, dass** die weiteren Lagereinheiten (10) als Wälz- und/oder Gleitlager ausgeführt sind.

13. Flugtriebwerk nach einem der Ansprüche 1 bis 12, **dadurch gekennzeichnet, dass** die Planetenräder (7) jeweils zwei voneinander getrennte und in axialer Richtung voneinander beabstandete schrägverzahnte Zahnbereiche (7A, 7B) aufweisen, die jeweils mit damit korrespondierenden schrägverzahnten Zahnbereichen (11 A, 11 B und 12A, 12B) des Hohlrades (11) und des Sonnenrades (12) kämmen, wobei die Schrägungswinkel der Zahnbereiche (7A, 7B, 11 A, 11 B, 12A, 12B) der Planetenräder (7), des Hohlrades (11) und des Sonnenrades (12) zur Minimierung axialer Verzahnungskräfte gegengleich ausgeführt sind.

14. Flugtriebwerk nach einem der Ansprüche 7 bis 13, **dadurch gekennzeichnet, dass** der Planetenträger (6) radial innerhalb der fingerartigen Bereiche (16) über die Verbindungseinrichtung (13) mit dem Gehäuse (14) verbunden ist.

15. Flugtriebwerk nach einem der Ansprüche 7 bis 13, **dadurch gekennzeichnet, dass** der Planetenträger (6) radial außerhalb der fingerartigen Bereiche (16) am Gehäuse (14) angebunden ist.

16. Planetenträger eines Umlaufgetriebes, insbesondere eines Umlaufgetriebes eines Flugtriebwerkes gemäß einem der Patentansprüche 1 bis 15, **dadurch gekennzeichnet, dass** der Planetenträger vorzugsweise mit Leitungen zum Führen von Fluid über ein 3D-Druckverfahren hergestellt ist.
